(19) Europäisches Patentamt
European Patent Office
Office européen des brevets

(11) EP 1 377 625 B1

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **02753709.1**

(22) Anmeldetag: **13.03.2002**

(51) Int Cl.:
***C08G 64/30*** *(2006.01)* ***C08G 64/06*** *(2006.01)*

(86) Internationale Anmeldenummer:
**PCT/EP2002/002718**

(87) Internationale Veröffentlichungsnummer:
**WO 2002/077065 (03.10.2002 Gazette 2002/40)**

# (54) POLYCARBONAT MIT AUSGEPRÄGTEM SCHERENTZÄHUNGSVERHALTEN

POLYCARBONATE HAVING A PRONOUNCED SHEAR THINNING BEHAVIOR

POLYCARBONATE A COMPORTEMENT MARQUE EN DILUTION PAR CISAILLEMENT

(84) Benannte Vertragsstaaten:
**AT BE CH CY DE DK ES FI FR GB GR IE IT LI LU MC NL PT SE TR**

(30) Priorität: **26.03.2001 DE 10114809**
**10.05.2001 DE 10122493**

(43) Veröffentlichungstag der Anmeldung:
**07.01.2004 Patentblatt 2004/02**

(73) Patentinhaber: **Bayer MaterialScience AG**
**51368 Leverkusen (DE)**

(72) Erfinder:
- **MASON, James**
**Carnegie, PA 15106 (US)**
- **KRATSCHMER, Silke**
**60488 Frankfurt (DE)**
- **HUCKS, Uwe**
**46519 Alpen (DE)**

(56) Entgegenhaltungen:
**WO-A-99/01495**
**US-A- 5 399 659**
**US-A- 5 932 683**

- **PATENT ABSTRACTS OF JAPAN vol. 2002, no. 02, 2. April 2002 (2002-04-02) -& JP 2001 302780 A (MITSUBISHI CHEMICALS CORP), 31. Oktober 2001 (2001-10-31)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 377 625 B1

## Beschreibung

Die Erfindung betrifft ein neuartiges verzweigtes schmelzpolymerisiertes Polycarbonat mit ausgeprägtem nicht-Newtonschen Fließverhalten, dieses enthaltende Zusammensetzungen sowie daraus hergestellte Formkörper. Die Erfindung betrifft ferner ein Verfahren zur Herstellung dieses Polycarbonats.

Polycarbonat wird industriell mit Hilfe des Grenzflächenverfahrens oder durch Umesterung in der Schmelze (Schmelzpolymerisationsverfahren) erzeugt. Das Schmelzpolymerisationsverfahren wird immer interessanter, da es ohne den Einsatz von Phosgen oder chlorierten Lösungsmitteln durchführbar ist. Durch das derzeit hauptsächlich verwendete Grenzflächenverfahren erzeugte Polycarbonate sind linear, wobei in solchen Polymeren keine multifunktionellen Struktureinheiten vorhanden sind. Dieser Typ von linearem Polycarbonat, dem die zur Verzweigung befähigten multifunktionellen Struktureinheiten fehlen, weist nur ein geringes nicht-Newtonsches Fließverhalten auf. Um während des Grenzflächenverfahrens eine Verzweigung zu erreichen, muß ein Verzweigungsmittel zugesetzt werden. Durch die erzeugte Verzweigung mit multifunktionellen Struktureinheiten wird die Fließfähigkeit des Polymers bei niedriger Scherrate erhöht und bei hoher Scherrate erniedrigt.

Im Schmelzpolymerisationsverfahren erzeugte Polycarbonate enthalten zwangsweise multifunktionelle Struktureinheiten. Die unvermeidliche Erzeugung von multifunktionellen verzweigenden Struktureinheiten während der Polymerisation ist bekannt und beispielsweise beschrieben in Angewandte Chemie 20, S. 633-660, 1956.

In US 5 932 683 wird ein Schmelzeverfahren beschrieben, wodurch ein Schmelzepolycarbonat mit drei speziellen Struktureinheiten entsteht. Als Parameter für die Herstellung dieses Polycarbonats wird eine besondere Beziehung zwischen der Reaktionszeit und -temperatur genannt. Das beschriebene Polycarbonat weist ein besonders leichtes Fließverhalten bei hohen Scherraten auf. Üblicherweise ist dieses Fließverhalten jedoch gekoppelt mit einer schlechten Fließfähigkeit bei niedrigen Scherraten.

Die Aufgabe bestand also darin, ein Schmelzpolycarbonat zu entwickeln, das neben der guten Fließfähigkeit bei hohen Scherraten bei geringen Scherraten nicht schlechter fließt als unverzweigtes Polycarbonat.

Die Aufgabe wurde gelöst durch ein Schmelzeverfahren, welches nicht den in US 5 932 683 genannten Parametern entspricht, das ein Schmelzepolycarbonat erzeugt, welches eine neue tetrafunktionale Struktureinheit enthält. Dieses besonders verzweigte Polycarbonat zeigt aber trotzdem bei niedriger Scherrate ein vergleichbares Fließverhalten wie unverzweigtes Polycarbonat aus der Phasengrenzfläche, während das Fließverhalten bei hoher Scherrate verbessert ist. Das erfindungsgemäße Polycarbonat kann daher besonders gut im Spritzguß eingesetzt werden, und ist daneben bei der Extrusion vergleichbar mit einem unverzweigten Polycarbonat.

Das erfindungsgemäße Polycarbonat besitzt die allgemeine Formel (1)

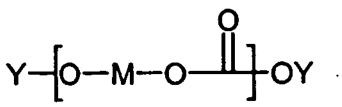

(1)

wobei die eckige Klammer sich wiederholende Struktureinheiten des Polycarbonats umfaßt,

M Ar oder eine multifunktionelle Verbindung A sein kann,

wobei

Ar eine Verbindung sein kann, die durch Formel (2) dargestellt wird,

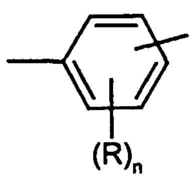

(2)

oder besonders bevorzugt eine Verbindung, die durch Formel (3) dargestellt wird,

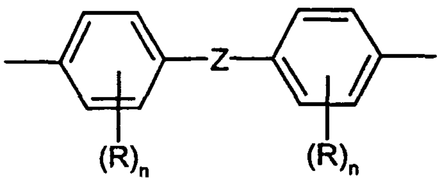

(3)

wobei

Z $C_1$-$C_8$-Alkyliden oder $C_5$-$C_{12}$-Cycloalkyliden, S, $SO_2$ oder eine Einfachbindung,

R ein substituiertes oder unsubstituiertes Phenyl, Methyl, Propyl, Ethyl, Butyl, Cl oder Br ist und

n für 0, 1 oder 2 steht,

wobei

Y H oder eine Verbindung der Formel (4)

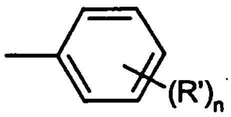

(4)

ist, wobei

R' H, $C_1$-$C_{20}$-Alkyl, $C_6H_5$ oder $C(CH_3)_2C_6H_5$ und gleich oder verschieden sein kann und

n für 0, 1 oder 2 steht,

wobei die multifunktionelle Verbindung A eine Verbindung der Formel

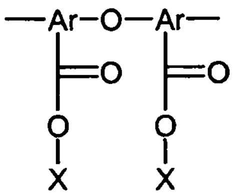

(A)

wobei

X wie in den folgenden Verbindungen B, C und D = Y oder -(MOCOO)Y ist,

wobei M und Y die oben angegebene Bedeutung haben,
und in einer Menge von 201 bis 5.000 ppm, vorzugsweise von 350 bis 2.000 ppm und am meisten bevorzugt von 300 bis 1.000 ppm im Polycarbonat enthalten sein kann. Besonders bevorzugt ist Verbindung A eine Verbindung der Formel

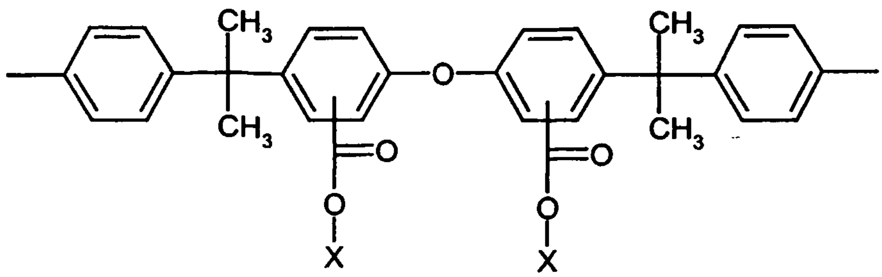 (A1)

Das erfindungsgemäße Polycarbonat kann zusätzlich die Verbindungen B, C und D enthalten.

Verbindung B kann eine multifunktionelle Verbindung der Formel

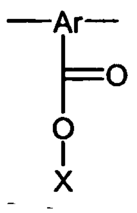 (B)

sein und in einer Menge von 1.501 bis 10.000 ppm, vorzugsweise von 1.550 bis 3.000 ppm, am meisten bevorzugt von 1.600 bis 2.000 ppm im Polycarbonat enthalten sein. Besonders bevorzugt ist Verbindung B eine Verbindung der Formel

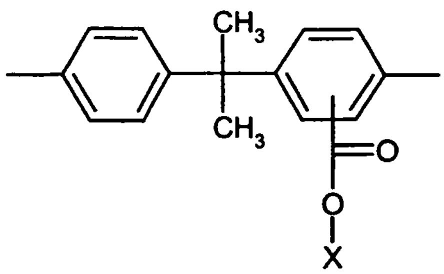 (B1)

Verbindung C kann eine multifunktionelle Verbindung der Formel

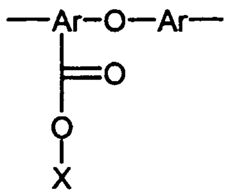 (C)

sein und in einer Menge von 351 bis 5.000 ppm, vorzugsweise von 400 bis 2.000 ppm, am meisten bevorzugt von 450 bis 1.000 ppm im Polycarbonat enthalten sein.

Besonders bevorzugt ist Verbindung C eine Verbindung der Formel

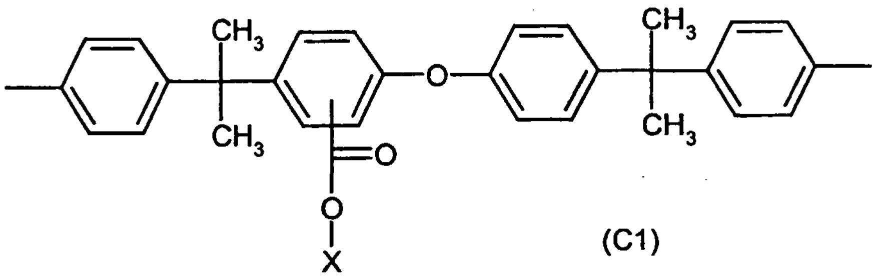

(C1)

In den Verbindungen A1, B, B1, C und C1 hat X die für Verbindung A angegebene Bedeutung.

Verbindung D kann eine Verbindung der Formel

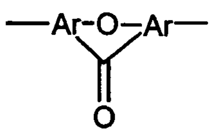

(D)

sein und in einer Menge von 751 bis 5.000 ppm, vorzugsweise von 800 bis 2.000 ppm, am meisten bevorzugt von 850 bis 1.500 ppm im Polycarbonat enthalten sein.

Besonders bevorzugt ist Verbindung D eine Verbindung der Formel

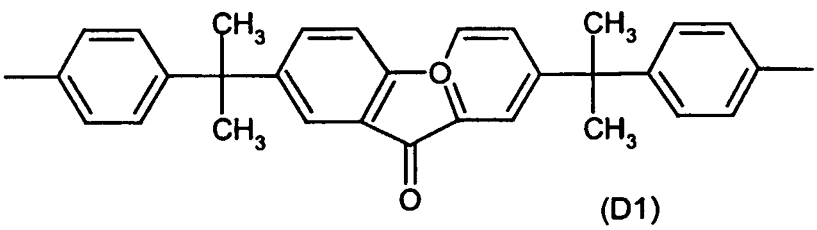

(D1)

Das erfindungsgemäße Polycarbonat kann ein durch Gelpermeationschromatographie bestimmtes Gewichtsmittel des Molekulargewichts von 5.000 bis 80.000, vorzugsweise 10.000 bis 60.000 und in am meisten bevorzugter Weise 15.000 bis 40.000 aufweisen.

Das erfindungsgemäße Polycarbonat kann auch durch das Scherentzähnungsverhältnis y gemäß der Gleichung

$$y > 0{,}30 + 0{,}1312\, x^{14{,}881},$$

wobei x die relative Viskosität des Polycarbonats ist, definiert werden. Das Scherentzähnungsverhältnis dient der Quantifizierung des Fließverhaltens. Das Scherentzähungsverhältnis ist das Verhältnis der Viskosität bei einer niedrigen Scherrate zur Viskosität bei einer hohen Scherrate. Erfindungsgemäß ist das Scherentzähnungsverhältnis das Verhältnis der Viskosität bei einer Scherrate von 50 $s^{-1}$ zur Viskosität bei einer Scherrate von 5.000 $s^{-1}$gemessen bei 280°C.

Das erfindungsgemäße Polycarbonat hat trotz des hohen Anteils an Verzweigungen und dem damit verbundenen ausgeprägten nicht-Newtonschen Fließverhalten eine ausgezeichnete Farbe und Farbstabilität während des Spritzgießens. Es zeigt eine deutliche geringere Vergilbung als die bekannten Schmelzepolycarbonate.

Die Herstellung aromatischer Polycarbonate nach dem Schmelzumesterungsverfahren ist bekannt und beispielsweise beschrieben in "Schnell", Chemistry and Physics of Polycarbonats, Polymer Reviews, Vol.9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich auf Des. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Das erfindungsgemäße Polycarbonat, das auch ein Polyestercarbonat sein kann, wird durch die Schmelzumesterungsreaktion geeigneter Diphenole und Kohlensäurediarylester in Gegenwart eines geeigneten Katalysators hergestellt. Das Polycarbonat kann auch durch die Kondensation von Carbonatoligomeren, die Hydroxy- oder Carbonatendgruppen enthalten, und geeigneten Diphenolen sowie Kohlensäurediarylestern hergestellt werden.

Geeignete Kohlensäurediarylester im Zusammenhang mit der Erfindung sind Di-$C_6$ bis $C_{14}$-arylester, vorzugsweise die Diester von Phenol oder von alkylsubstituierten Phenolen, d. h. Diphenylcarbonat, Dikresylcarbonat und Di-4-tert.-butylphenyl carbonat. Am meisten bevorzugt ist Diphenylcarbonat.

Geeignete Carbonatoligomere werden durch die obige Formel (1) mit Molekulargewichten von 220 bis 15.000 beschrieben.

Zu den geeigneten Di-$C_6$-$C_{14}$-arylestern gehören auch unsymmetrische Diarylester, die ein Gemisch von Arylsubstituenten enthalten. Am meisten bevorzugt sind Phenylkresylcarbonat und 4-tert.-Butylphenylphenylcarbonat.

Zu den geeigneten Diarylestem gehören auch Gemische von mehr als einem Di-$C_6$-$C_{14}$-arylester. Am meisten bevorzugte Gemische sind Gemische von Diphenylcarbonat, Dikresylcarbonat und Di-4-tert.-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxybenzolverbindungen im Zusammenhang mit der Erfindung sind solche, die der Formel (5) entsprechen:

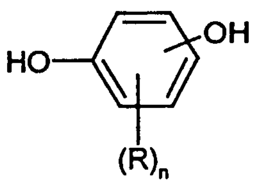

(5)

worin

R ein substituiertes oder nicht substituiertes Phenyl, Methyl, Propyl, Ethyl, Butyl, Cl oder Br ist und

n für 0, 1 oder 2 steht.

Am meisten bevorzugte Dihydroxybenzolverbindungen sind 1,3-Dihydroxybenzol, 1,4-Dihydroxybenzol und 1,2-Dihydroxybenzol.

Geeignete Diphenole im Zusammenhang mit der Erfindung sind solche, die der Formel (6) entsprechen:

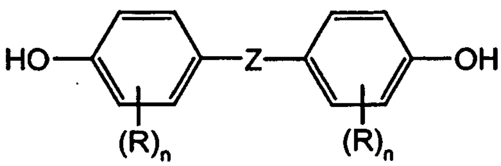

(6)

wobei

Z $C_1$-$C_8$-Alkyliden oder $C_5$-$C_{12}$-Cycloalkyliden, S, $SO_2$ oder eine Einfachbindung, R ein substituiertes oder unsubstituiertes Phenyl, Methyl, Propyl, Ethyl, Butyl, Cl oder Br ist und

n für 0, 1 oder 2 steht. Bevorzugte Diphenole sind 4,4'-Dihydroxydiphenyl, 4,4'-Dihydroxydiphenylsulfid, 1,1-Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl) propan, 2,4-Bis(4-hydroxyphenyl)-2-methylbutan, 2,2-Bis(3-methyl4-hydroxy-phenyl)-propan, 2,2-Bis(3-chlor-4-hydroxyphenyl)propan, Bis-(3,5-dimethyl-4-hydroxy-phenyl)methan, 2,2-Bis(3,5-dimethyl-4-hydroxyphenyl)propan, Bis(3,5-dimethyl-4-hydroxyphenyl)sulfon, Bis(4-hydroxyphenyl)sulfon, 1,2-Bis[2-(4-hydroxy-phenyl)isopropyl]benzol, 1,3-Bis(2-(4-hydroxyphenyl)isopropyl]benzol, 1,4-Bis[2-(4-hydroxyphenyl)isopropyl]benzol, 1,1-Bis(4-hydroxyphenyl)-1-phenylethan, 2,4-Bis(4-hydroxyphenyl)-2-methylbutan, 2,2-Bis(3,5-dichlor-4-hydroxyphenyl)-propan, 2,2-Bis(3,5-dibrom-4-hydroxyphenyl)propan, 1,1-Bis(4-hydroxyphenyl)-3,3,5-trimethylcyclohexan.

Die am meisten bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl) propan und 1,3-Bis[2-(4-hydroxyphenyl)isopropyl]benzol.

Zu den geeigneten Diphenolen gehören auch Gemische von mehr als einem Diphenol; dabei würde ein Copolycarbonat entstehen. Die am meisten bevorzugten Gemische sind 1,3-Bis[2-(4-hydroxyphenyl)isopropyl]benzol, 1,1-Bis(4-hydroxyphenyl)-3,3,5-trimethylcyclohexdan, 2,2-Bis(4-hydroxyphenyl)propan, 4,4'-Dihydroxydiphenyl und 2,2-Bis (3,5-dibrom-4-hydroxyphenyl)propan.

Zusätzlich kann ein Verzweigungsmittel hinzugefügt werden, wie Verbindungen, die drei funktionelle phenolische OH-Gruppen enthalten. Dies würde das Polymer offensichtlich verzweigen und würde das nicht-Newtonsche Polymers erhöhen. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)-hepten-2, 4,6-Dimethyl-2,4,6-tris(4-hydroxyphenyl)heptan, 1,3,5-Tris(4-hydroxyphenyl)benzol, 1,1,1-Tris(4-hydroxyphenyl)ethan, Tris(4-hydroxyphenyl)phenylmethan, 2,2-Bis[4,4-bis(4-hydroxyphenyl)cyclohexyl] propan, 2,4-Bis(4-hydroxyphenylisopropyl)phenol, 2,6-Bis(2-hydroxy-5'-methylbenzyl)-4-methyl-phenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)methan, Tetrakis(4-(4-hydroxyphenylisopropyl)phenoxy)methan und 1,4-Bis((4',4"-dihydroxy-triphenyl)-methyl)benzol, Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (7)

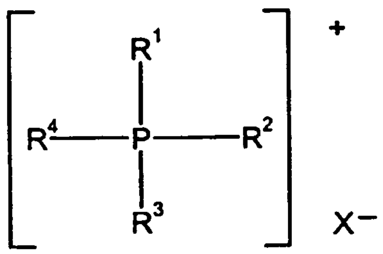

(7)

worin

$R^1$, $R^2$, $R^3$ und $R^4$ die gleichen oder verschiedene $C_1$ bis $C_{18}$-Alkylene, $C_6$ bis $C_{10}$-Aryle oder $C_5$ bis $C_6$-Cycloalkyle bezeichnen können und $X^-$ für ein Anion stehen kann, bei dem das entsprechende Säure-Base-Paar $H^+ + X^- \leftrightarrow HX$ ein $pK_b$ von < 11 hat sowie ein Cokatalysator.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind $10^{-2}$ bis $10^{-8}$ Mol pro Mol Diphenol und die am meisten bevorzugten Katalysatormengen sind $10^{-4}$ bis $10^{-6}$ Mol pro Mol Diphenol. Weitere Cokatalysatoren werden zusätzlich zu dem Phosphoniumsalz verwendet, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators liegen im Bereich von 201 bis 10.000 ppb, vorzugsweise 220 bis 1.500 ppb und am meisten bevorzugt 240 bis 500 ppb, jeweils berechnet als Natrium.

Die Polycarbonate können unter Reaktionsbedingungen hergestellt werden, die in Stufen mit Temperaturen von 150 bis 400°C durchgeführt werden, die Verweilzeit in jeder Stufe kann 15 Minuten bis 5 Stunden betragen, und die Drücke betragen 1.000 bis 0,01 mbar

Gegenstand der Erfindung sind femer Polycarbonat-Zusammensetzungen, die die erfindungsgemäßen Polycarbonate enthalten, sowie solche Zusammensetzungen enthaltende Formkörper.

Die erfindungsgemäßen Zusammensetzungen können neben den Polycarbonaten oder Polyestercarbonaten weitere polymere Bestandteile und übliche Additive enthalten. Mögliche polymere Bestandteile sind beispielsweise Styrol/Acryl/Nitril-Terpolymere (SAN), Acryl/Butadien/Styrol-Terpolymere (ABS), Polymethylmethacrylat (PMMA), fluorierte Polyolefine (PTFE), Polyphenylstyrol (PPS), Polyolefine wie Polyethylen, Polypropylen und Ethylen/Propylen-Kautschuke, Epoxyharze, Polyester wie Polybutylenterephthalat (PBT), Polyethylenterephthalat (PET), Polycyclohexendimethanol (PCT), Copolyester von Ethylenglycol und Cyclohexendimethanolterephthalsäure im Verhältnis der beiden Bestandteile von 1 : 4 (PCTG), Copolyester von Ethylenglycol und Cyclohexendimethanolterephthalsäure im Verhältnis der beiden Bestandteile von 4 : 1 (PETG) sowie andere nach dem Grenzflächenverfahren erzeugte Polycarbonate sowie Mischungen der zuvor genannten Komponenten. Weitere Additive sind Entformungsmittel, Stabilisatoren, Antioxidantien, Flammschutzmittel, Farbstoffe und Pigmente, Antistatika, Nukleiermittel, Antitropfmittel sowie organische und weitere anorganische Füll- und Verstärkungsstoffe.

Das erfindungsgemäße Polycarbonat kann in der erfindungsgemäßen Zusammensetzung in einer Menge von vorzugsweise 5 bis 95 Gew.-%, besonders bevorzugt 10 bis 90 Gew.-% und in am meisten bevorzugter Weise 20 bis 80 Gew.-%, bezogen auf die Masse der Zusammensetzung, enthalten sein. Die weiteren polymeren Bestandteile der erfindungsgemäßen Zusammensetzung können in einer Menge von vorzugsweise 1 bis 60 Gew.-%, besonders bevorzugt 1 bis 40 Gew.-% und in am meisten bevorzugter Weise 2 bis 30 Gew.-%, bezogen auf die Masse der Zusammensetzung, enthalten sein.

Die Zusammensetzungen können bis zu 60, vorzugsweise 10 bis 40 Gew.-%, bezogen auf die gefüllte oder verstärkte Formmasse, anorganische Materialien wie Füll- und/oder Verstärkungsstoffe enthalten. Flammschutzmittel können in der erfindungsgemäßen Zusammensetzung in einer Menge von bis zu 35 Gew.-%, vorzugsweise 10 bis 25 Gew.-%, bezogen auf die Masse der Zusammensetzung enthalten sein.

Diese und weitere in den erfindungsgemäßen Zusammensetzungen neben den Polycarbonaten/Polyestercarbonaten möglicherweise enthaltene Bestandteile oder Additive werden anschließend beispielhaft erläutert.

Diese Substanzen sind in vielen Veröffentlichungen zu finden wie etwa in Additives for Plastics Handbook, John Murphy, 1999 und im Handel erhältlich.

1. Geeignete Antioxidantien sind beispielsweise:

1.1. Alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.

1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.

1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis(3,5-di-tert-butyl-4-hydroxyphenyl)adipat.

1.4. Tocopherole, zum Beispiel α-Tocopherol, β-Tocopherol, γ-Tocopherol, δ-Tocopherol und Gemische davon (Vitamin E).

1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis (3,6-di-sec-amylphe-nol), 4,4'-Bis(2,6-dimethyl-4-hydroxyphenyl)disulfid.

1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclohexylphenol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)pentan.

1.7. O-, N- und S-Benzylverbindungen, zum Beispiel 3,5,3',S'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris-(3,5-di-tert-butyl-4-hydroxybenzyl)amin, Bis(4-tert-butyl-3-hydroxy-2,6-dimethylbenzyl)dithioterephtha-lat, Bis(3,5-di-tert-butyl-4-hydroxybenzyl)-sulfid, Isooctyl-3,5-di-tert-butyl-4-hydroxybenzylmercaptoacetat.

1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methyl-benzyl)malonat, Didodecylmercaptoethyl-2,2-bis(3,5-di-tert-butyl-4-hydroxybenzyl) malonat, Bis[4-(1,1,3,3-tetramethylbutyl)phenyl]-2,2-bis(3,5-di-tert-butyl-4-hydroxybenzyl)malonat.

1.9. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxy-benzyl)-2,3,5,6-tetramethylbenzol, 2,4,6-Tris(3,5-di-tert-butyl-4-hydroxybenzyl)phen-ol.

1.10. Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxy-anilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl) isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.

1.11. Acylaminophenole, zum Beispiel 4-Hydroxylauranilid, 4-Hydroxytearanilid, Octyl-N-(3,5-di-tert-butyl-4-hydroxyphenyl)carbamat.

1.12. Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.14. Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabi-cyclo[2.2.2]octan.

1.15. Ester von 3,5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo [2.2.2]octan.

1.16. Amide of β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis-(3,5-di-tert-butyl-4-hydroxyphenylpropionyl)hydrazid, N,N'-Bis[2-(3-[3,5-di-tert-butyl-4-hydroxyphenyl]-propionyloxy)ethyl]oxamid (Naugard® XL-1 von Uniroyal).

1.17. Ascorbinsäure (Vitamin C)

1.18. Aminische Antioxidantien, zum Beispiel N,N'-Diisopropyl-p-phenylendiamin, N,N'-Di-sec-butyl-p-phenylendiamin, N,N'-Bis(1,4-dimethylpentyl)-p-phenylen-diamin, N,N'-Bis(1-ethyl-3-methylpentyl)-p-phenylendiamin, N,N'-Bis(1-methyl-heptyl)-p-phenylendiamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylen-diamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis [4-(1',3'-dimethylbutyl)-phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol. Es können einzelne dieser Verbindungen oder Gemische derselben eingesetzt werden.

1.19 Geeignete Thiosynergisten sind zum Beispiel Dilaurylthiodipropionat und/oder Distearylthiodipropionat

2. UV-Absorber und Lichtstabilisatoren können in den erfindungsgemäßen Zusammensetzungen in Mengen von 0,1 bis 15 Gew.-%, vorzugsweise 3 bis 8 Gew.-%, bezogen auf die Masse der Zusammensetzung, eingesetzt werden. Geeignete UV-Absorber und Lichtstabilisatoren sind beispielsweise:

2.1. 2-(2'-Hydroxyphenyl)benzotriazole, um Beispiel 2-(2'-Hydroxy-5'-methylphenyl) benzotriazol, 2-(3',5'-Di-tert-butyl-2'-hydroxyphenyl)benzotriazol, 2-(5'-tert-Butyl-2'-hydroxyphenylbenzotriazol, 2-(2'-Hydroxy-5'-(1,1,3,3-tetramethylbutyl) phenyl)benzotriazol, 2-(3',5'-Di-tert-butyl-2'-hydroxyphenyl)-5-chlorbenzotriazol, 2-(3'-tert-Butyl-2'-hydroxy-5'-methylphenyl)-5-chlorbenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonyl-ethyl)phenyl)-5-chlorbenzotriazol, 2-(3'-tert-Butyl-5'-[2-(2-ethyl-hexyloxy)carbonylethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyl-oxycarbonylethyl)phenyl)benzotriazol, 2-(3'-tert-Butyl-5'-[2-(2-ethylhexyloxy) carbonylethyl]-2'-hydroxyphenyl)benzotriazol, 2-(3'-Dodecyl-2'-hydroxy-5'-methyl-phenyl)benzotriazol, 2-(3'-tert-Butyl-2'-hydroxy-5'-(2-isooctyl-oxycarbonylethyl) phenylbenzotriazol, 2,2'-Methylen-bis[4-(1,1,3,3-tetramethylbutyl)-6-benzotriazol-2-ylphenol]; das Umesterungsprodukt von 2-[3'-tert-Butyl-S'-(2-methoxycarbonylethyl)-2'-hydroxyphenyl]-2H-benzotriazol mit Polyethylenglycol 300; $[R-CH_2CH_2-COO-CH_2CH_2]_2$, wobei R = 3'-tert-Butyl-4'-hydroxy-5'-2H-benzotriazol-2-yl-phenyl, 2-[2'-Hydroxy-3'-(α,α-dimethylbenzyl)-5'-(1,1,3,3-tetra-methylbutyl)-phenyl] benzotriazol, 2-[2'-Hydroxy-3'-(1,1,3,3-tetramethylbutyl)-5'-(α,α-dimethylbenzyl)phenyl] benzotriazol.

2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.

2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

2.4. Acrylate, zum Beispiel Ethyl-α-cyan-β,β-diphenylacrylat, Isooctyl-α-cyan-β, β-diphenylacrylat, Methyl-α-carbomethoxycinnamat, Methyl-α-cyan-β-methyl-p-methoxycinnamat, Butyl-α-cyan-β-methyl-p-methoxycinnamat, Methyl-α-carbomethoxy-p-methoxycinnamat und N-(β-Carbomethoxy-β-cyanvinyl)-2-methylindolin.

2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1-Phenyl-4-lauroyl-5-hydroxypyrazol, mit oder ohne zusätzliche Liganden.

2.6. Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl) bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1,2-Bis(3-aminopropyl-amino)ethan, das Kondensat von 2-Chlor-4,6-bis(4-n-butylamino-1,2,2,6,6-penta-methylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-penta-methyl-4-piperidyl)pyrrolidin-2,5-dion, ein Gemisch von 4-Hexadecyloxy- und 4-Stearyloxy-2,2,6,6-tetramethylpiperidin, ein Kondensationsprodukt von N,N'-Bis(2,2,6,6-tetramethyl-4-piperidyl)hexamethylendiamin und 4-Cyclohexylamino-2,6-dichloro-1,3,5-triazin, ein Kondensationsprodukt von 1,2-Bis(3-aminopropylamino)ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1,1-Bis(1,2,2,6,6-pentamethyl-4-piperidyl-oxycarbonyl)-2-(4-methoxyphenyl)ethen, N,N'-Bis(formyl)-N,N'-bis(2,2,6,6-tetra-methyl-4-piperidyl)hexamethylendiamin, Diester von 4-Methtixymethylenmalonsäure mit 1,2,2,6,6-Pentamethyl-4-hydroxypiperidin, Poly(methylpropyl-3-oxy-4-(2,2,6,6-tetramethyl-4-piperidyl)]siloxan, Reaktionsprodukt von Maleinsäureanhydrid-$\alpha$-Olefin-Copolymer mit 2,2,6,6-Tetramethyl-4-aminopiperidin oder 1,2,2,6,6-Pentamethyl-4-aminopiperidin.

2.7. Oxamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl) oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.

2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethyl-phenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
Es können einzelne dieser Verbindungen oder Gemische derselben eingesetzt werden.

3. Geeignete Metalldesaktivatoren sind zum Beispiel N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden) oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis (salicyloyl)thiopropionyldihydrazid. Es können einzelne dieser Verbindungen oder Gemische derselben eingesetzt werden.

4. Als Wärmestabilisatoren geeignete Phosphite und Phosphonites sind zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis(2,4-di-tert-butylphenyl)pentaerythritdiphosphit, Bis(2,6-di-tert-butyl-4-methylphenyl)pentaery-thritdiphosphit, Diisodecyloxypentaerythritdiphosphit, Bis(2,4-di-tert-butyl-6-methylphenyl)pentaerythritdiphosphit, Bis(2,4,6-tris(tert-butylphenyl)pentaerythrit-diphosphit, Tristearylsorbittriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl) methylphosphit, Bis(2,4-di-tert-butyl-6-methylphenyl)ethylphosphit, 6-Fluor-2,4,8,10-tetra-tert-butyl-12-methyldibenz[d,g]-1,3,2-dioxaphosphocin, 2,2',2"-Nitrilo-[triethyltris (3,3',5,5'tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butyl-phenoxy)-1,3,2-dioxaphosphiran. Es können einzelne dieser Verbindungen oder Gemische derselben eingesetzt werden.

Besonders bevorzugt sind Tris(2,4-di-tert-butylphenyl)phosphit (Irgafos® 168, Ciba-Geigy), Triphenylphosphin, oder (2,4,6-Tri-tert.-butyl-phenyl)-(2-butyl-2-ethyl-propan-1,3-diyl)phosphit (Ultranox 641®, GE Specialty Chemicals).

Beispiele geeigneter Phosphite und Phosphonite sind auch:

(8)

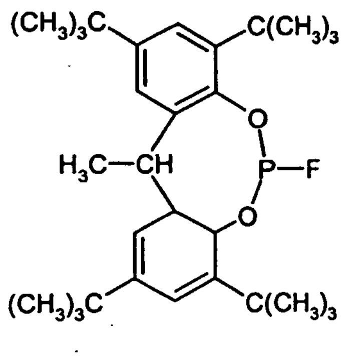

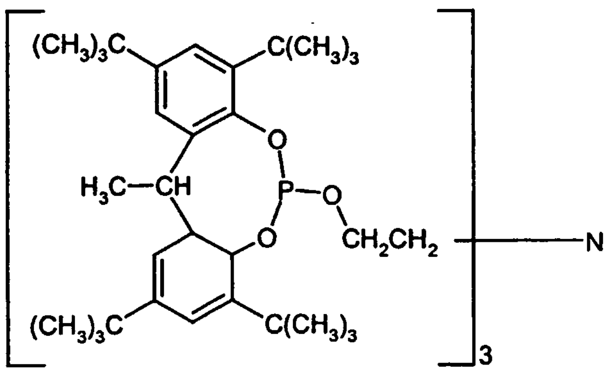

(9)

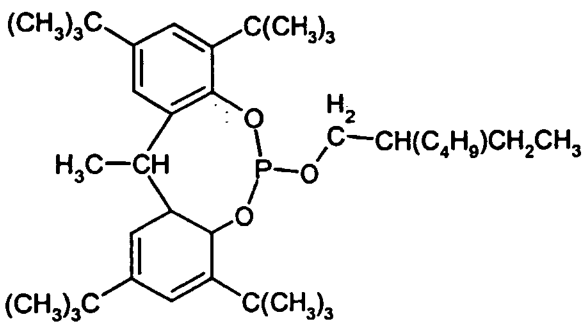

(10)

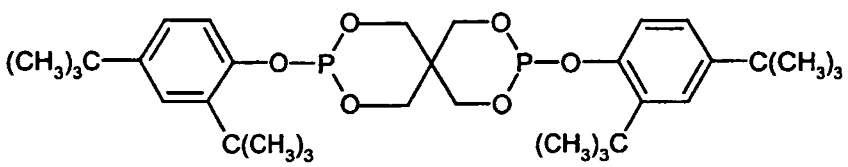

(11)

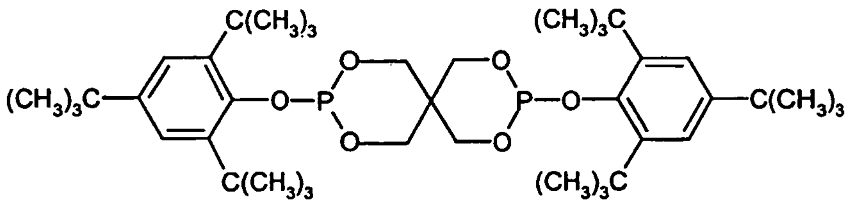

(12)

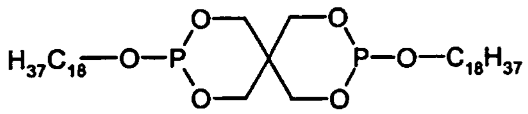

(13)

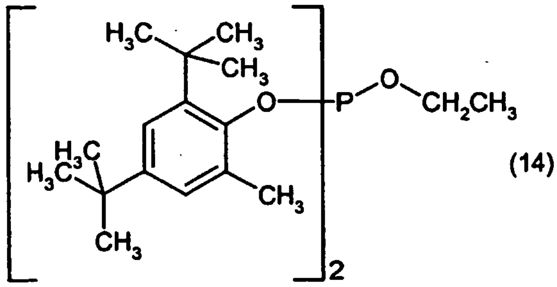

(14)

5. <u>Geeignete Peroxidfänger</u> sind zum Beispiel Ester von β-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis(dodecylmercapto)propionat. Es können einzelne dieser Verbindungen oder Gemische derselben eingesetzt werden.

6. <u>Geeignete basische Costabilisatoren</u> sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.

7. <u>Geeignete Keimbildner</u> sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)-sorbit, 1,3:2,4-Di(paramethyldibenzyliden)sorbit und 1,3:2,4-Di(benzyliden)sorbit. Es können einzelne dieser Verbindungen oder Gemische derselben eingesetzt werden.

8. <u>Geeignete Füllstoffe und Verstärkungsmittel</u> sind zum Beispiel Caiciumcarbonat, Silicate, Glasfasern, Glasballons, Asbest, Talk, Kaolin, Glimmer, Bariumsulfat, Metalloxide und -hydroxide, Ruß, Graphit, Wollastonit, Holzmehl und Mehle oder Fasern anderer Naturprodukte, synthetische Fasern. Es können einzelne dieser Verbindungen oder Gemische derselben eingesetzt werden.

9. <u>Geeignete andere Additive</u> sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.

10. <u>Geeignete Benzofuranone und Indolinone</u> sind zum Beispiel diejenigen, die in U.S. 4 325 863; U.S. 4 338 244; U.S. 5 175 312; U.S. 5 216 052; U.S. 5 252 643; DE-A-4 316 611; DE-A-4 316 622; DE-A-4 316876; EP-A-0 589 839 oder EP-A-0 591 102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl) benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie

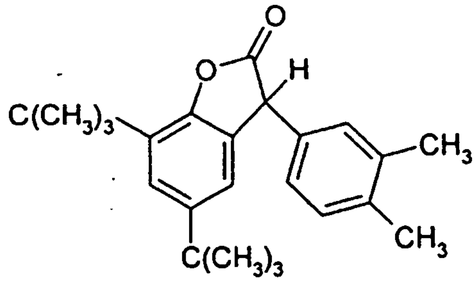

(15)

Diese Verbindungen wirken beispielsweise als Antioxidantien. Es können einzelne dieser Verbindungen oder Gemische derselben eingesetzt werden.

11. Geeignete fluoreszierende Weichmacher sind die in "Plastics Additives Handbook", Hrsg. R. Gächter und H. Müller, Hanser Verlag, 3. Aufl., 1990, Seite 775-789 aufgeführten.

12. Geeignete Formtrennmittel sind Ester von aliphatischen Säuren und Alkoholen, z.B. Pentaerythrittetrastearat und Glycerinmonostearat, sie werden allein oder im Gemisch vorzugsweise in einer Menge von 0,02 bis 1 Gew.-%, bezogen auf die Masse der Zusammensetzung eingesetzt.

13. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie $C_4F_9SO_3^-Na^+$.

14. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

15. Geeignete Polymere sind SAN, ABS, PMMA, PTFE, PSU, PPS, Polyolefine, wie Polyethylen, Polypropylen und Ethylen-Propylen-Kautschuke, Epoxyharze, Polyester, wie PBT, PET, PCT, PCTG und PETG sowie andere im Grenzflächenverfahren erzeugte Polycarbonate.

16. Geeignete antistatische Mittel sind Sulfonatsalze beispielsweise Tetraethylammoniumsalze von $C_{12}H_{25}SO^{3-}$ oder $C_8F_{17}SO^{3-}$.

17. Geeignete Färbemittel sind Pigmente sowie organische und anorganische Farbstoffe.

18. Verbindungen, die Epoxygruppen enthalten, wie 3,4-Epoxycyclohexylmethyl-3,4-epoxycyclohexylcarboxylat, Copolymere von Glycidylmethacrylat und Epoxysilane.

19. Verbindungen, die Anhydridgruppen, wie Maleinsäureanhydrid, Bernsteinsäureanhydrid, Benzoesäureanhydrid und Phthalsäureanhydrid.

Die Verbindungen der Gruppen 18 und 19 wirken als Schmelzestabilisatoren. Sie können einzeln oder in Gemischen eingesetzt werden.

Die erfindungsgemäßen Zusammensetzungen (Formmassen) werden hergestellt, indem man die jeweiligen Bestandteile in bekannter Weise vermischt und bei Temperaturen von etwa 200°C und beispielsweise bei Temperaturen von 200°C bis 300°C in üblichen Aggregaten wie Innenknetem, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur.

Die erfindungsgemäßen Formmassen können zur Herstellung von Formkörpern jeder Art verwendet werden. Diese können durch Spritzguß, Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z. B. für Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen; auf der Gebiet der Elektrotechnik wie für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent oder undurchsichtig sein. Weitere Formkörper sind insbesondere optische und magnetooptische Datenspeicher wie Mini Disk, Compact Disk (CD) oder Digital Versatile Disk (DVD), Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

Die folgenden Beispiele dienen der weiteren Erläuterung der Erfindung.

## Beispiele

Die Polymere der Beispiele 1 bis 3 wurden durch Schmelzpolymerisation von Diphenylcarbonat und Bisphenol A in der Schmelze unter Verwendung von Tetraphenylphosphoniumphenolat und 250 ppb Natriumphenolat, berechnet als Natrium, als Katalysator hergestellt. Die Monomer- und Katalysatormengen sind in Tabelle 1 angegeben. Die Reaktionsbedingungen sind in Tabelle 2 angegeben. Die gemessene relative Viskosität der Lösung, der Vergilbungsindex (YI), die Schmelzviskosität, das Scherentzähungsverhältnis und die Mengen der multifunktionellen Verbindungen sind in Tabelle 3 angegeben.

Die Vergleichsbeispiele 1, 2, 3 sind lineare Polycarbonate und wurden nach einem üblichen Grenzflächenpolymerisationsverfahren hergestellt. Sie werden unter den Marken Makrolon® 2808, 2408 und 3108 von der Bayer AG vertrieben. Die Polymere der Vergleichsbeispiele 4 und 5 sind verzweigte Polycarbonate, die nach dem Grenzflächenpolymerisationsverfahren hergestellt wurden. Entsprechende Produkte werden unter den Marken Makrolon® 1243 und 1239 von der Bayer AG vertrieben. Die Vergleichsbeispiele 7, 8 und 9 wurden durch Reaktion von Diphenylcarbonat und Bisphenol A in der Schmelze unter Verwendung von Tetraphenylphosphoniumphenolat als Katalysator hergestellt. Das Polycarbonat von Beispiel 6 wurde durch Reaktion von Diphenylcarbonat und Bisphenol A in der Schmelze unter Verwendung von Tetraphenylphosphoniumphenolat und 100 ppb Natriumphenolat, berechnet als Natrium, als Katalysator hergestellt.

Zur Polymerisation kann ein übliches Umesterungsgefäß verwendet werden, dass zum Erhitzen und Evakuieren des Materials geeignet ist und eine ausreichend lange Misch- und Verweilzeit ermöglicht.

Die relative Viskosität wurde in einer 0,5 %igen Lösung von Methylenchlorid bei 20°C gemessen.

Der Vergilbungsindex (YI) wurde an spritzgegossenen Proben einer Dicke von 4 mm im Einklang mit CIELAB-Methoden bestimmt. Das Spritzgießen erfolgte bei 270°C, 300°C und 330°C.

Die Schmelzviskosität wurde unter Verwendung des Testverfahrens gemäß ISO 11443 bei 280°C bestimmt. Das nicht-Newtonsche Fließverhalten wurde durch Berechnen des Scherentzähungsverhältnisses quantifiziert. Das Scherentzähungsverhältnis wurde berechnet als Schmelzviskosität bei einer Scherrate von 50 $s^{-1}$, dividiert durch die Schmelzviskosität bei einer Scherrate von 5.000 $s^{-1}$.

Die Menge der multifunktionellen Verbindungen wurde bestimmt, indem man die monomeren Verbindungen nach einer Totalhydrolyse des Polycarbonats mit HPLC (high pressure liquid chromatography) abtrennte. Diese Verbindungen wurden durch Magnetresonanz-Spektroskopietechniken charakterisiert.

**Tabelle 1**

| Beispiel | V6 | V7 | V8 | V9 | 1 | 2 | 3 |
|---|---|---|---|---|---|---|---|
| DPC, Mol | 1,18 | 1,173 | 1,187 | 1,168 | 1,178 | 1,214 | 1,209 |
| BPA, Mol | 1,0 | 1,0 | 1,0 | 1,0 | 1,0 | 1,0 | 1,0 |
| Natriumphenolat (ppb), berechnet als Natrium | 100 | 0,0 | 0,0 | 0,0 | 250 | 250 | 250 |
| Tetraphenylphosphoniumphenolat, Mol | 0,00004 | 0,00004 | 0,00004 | 0,00004 | 0,00004 | 0,00004 | 0,00004 |
| DPC: Diphenylcarbonat; BPA: Bisphenol A | | | | | | | |

**Tabelle 2**

| Reaktionsbedingungen für Vergleichsbeispiele 6 bis 9 und Beispiele 1 bis 3 | Zeit (min) | Temperatur (°C) | Druck (mbar) |
|---|---|---|---|
| Vorkondensation | 45 | 190 | 1000 |
| Reaktor I | 20 | 190 | 200 |
| Reaktor II | 20 | 230 | 80 |
| Reaktor III | 10 | 250 | 50 |
| Reaktor IV | 10 | 270 | 25 |
| Reaktionsbedingungen für Vergleichsbeispiel 6 | | | |
| Verdampfer I | 45 | 275 | 7,4 |
| Verdampfer II | 130 | 310 | 1,40 |
| Reaktionsbedingungen für Vergleichsbeispiel 7 | | | |
| Verdampfer I | 45 | 275 | 7,3 |
| Verdampfer II | 130 | 312 | 1,00 |
| Reaktionsbedingungen für Vergleichsbeispiel 8 | | | |
| Verdampfer I | 45 | 275 | 5,5 |
| Verdampfer II | 130 | 312 | 0,5 |
| Reaktionsbedingungen für Vergleichsbeispiel 9 | | | |
| Verdampfer I | 45 | 275 | 7,3 |
| Verdampfer II | 130 | 312 | 0,98 |
| Reaktionsbedingungen für Beispiel 1 | | | |
| Verdampfer I | 45 | 275 | 8,5 |
| Verdampfer II | 120 | 310 | 2,25 |
| Reaktionsbedingungen für Beispiel 2 | | | |
| Verdampfer I | 45 | 275 | 6,5 |
| Verdampfer II | 120 | 310 | 0,90 |
| Reaktionsbedingungen für Beispiel 3 | | | |
| Verdampfer I | 45 | 275 | 6,5 |
| Verdampfer II | 120 | 310 | 1,26 |

**Tabelle 3**

| Beispiel | | V1 | V2 | V3 | V4 | V5 | V6 | V7 | V8 | V9 | 1 | 2 | 3 |
|---|---|---|---|---|---|---|---|---|---|---|---|---|---|
| relative Viskosität | | 1,294 | 1,259 | 1,322 | 1,287 | 1,318 | 1,292 | 1,277 | 1,283 | 1,287 | 1,276 | 1,269 | 1,291 |
| YI (Formen bei 270°C) | | 2,0 | 1,8 | | | | 3,7 | 2,6 | 2,8 | 2,6 | 4,0 | | |
| YI (Formen bei 300°C) | | 2,2 | 1,9 | | | | | | | | 4,2 | 4,5 | |
| YI (Formen bei 330°C) | | 2,4 | 2,0 | | | | 3,8 | 2,5 | 2,8 | 2,6 | 4,4 | | |
| Schmelzviskosität bei 50 $s^{-1}$ und 280°C | Pa·s | 1002 | 593 | 1685 | 1272 | 2075 | 1071 | 770 | 782 | 904 | 775 | 705 | 980 |
| Schmelzviskosität bei 5.000 $s^{-1}$ und 280°C | Pa·s | 186 | 148 | 214 | 167 | 205 | 188 | 160 | 159 | 170 | 139 | 132 | 150 |
| Scherentzähungs-verhältnis | | 5,4 | 4,0 | 7,9 | 7,6 | 10,1 | 5,7 | 4,8 | 4,9 | 5,3 | 5,6 | 5,3 | 6,5 |
| A | ppm | < 5 | < 5 | < 5 | < 5 | < 5 | 178 | < 5 | 53 | 59 | 639 | 756 | 657 |
| B | ppm | < 5 | < 5 | < 5 | < 5 | < 5 | 1475 | 226 | 231 | 256 | 1875 | 1946 | 1797 |
| C | ppm | < 5 | < 5 | < 5 | < 5 | < 5 | 337 | 6 | 10 | 21 | 708 | 904 | 716 |
| D | ppm | < 5 | < 5 | < 5 | < 5 | < 5 | 692 | 138 | 144 | 175 | 1015 | 1015 | 801 |

Obwohl diese neuen schmelzpolymerisierten Polycarbonate multifunktionelle Struktureinheiten enthalten, hochgradig verzweigt sind und ausgeprägte nicht-Newtonsche Fließeigenschaften aufweisen, zeigen die Polycarbonate ein überraschend gutes Fließverhalten. Die Polycarbonate der Beispiele, in denen 250 ppb Natriumphenolat verwendet wird, sind hochgradig verzweigt, was durch das Scherentzähnungsverhältnis gezeigt wird. Das Vergleichsbeispiel mit nur 100 ppb Natriumphenolat weist ein Scherentzähnungsverhältnis auf, das demjenigen von linearem Polycarbonat mit gleicher Viskosität vergleichbar ist. Daher wurden die ausgeprägteren nicht-Newtonschen Fließeigenschaften nur dann erhalten, wenn relativ große Mengen an Verzweigungsverbindungen vorhanden waren. Der hohe Verzweigungsgrad wurde ohne die übliche Bildung von hochgradig gelben Verbindungen erreicht.

## Patentansprüche

1. Schmelzpolymerisiertes Polycarbonat der allgemeinen Formel (1)

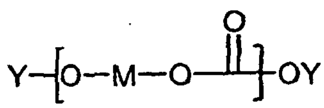

(1)

worin die eckige Klammer sich wiederholende Struktureinheiten bezeichnet,

M Ar oder eine multifunktionelle Verbindung A sein kann und

worin

Ar eine Verbindung sein kann, die durch Formel (2) dargestellt wird,

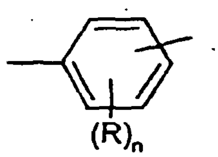

(2)

oder eine Verbindung, die durch Formel (3) dargestellt wird,

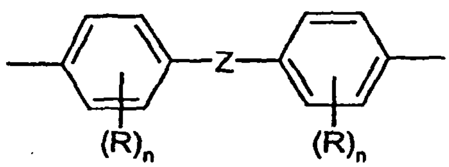

(3)

worin

Z = $C_1$-$C_8$-Alkyliden oder $C_5$-$C_{12}$-Cycloalkyliden, S, $SO_2$ oder eine Einfachbindung, R ein substituiertes oder unsubstituiertes Phenyl, Methyl, Propyl, Ethyl, Butyl, Cl oder Br ist und n für 0, 1 oder 2 steht,

worin die multifunktionelle Verbindung A eine Verbindung der Formel

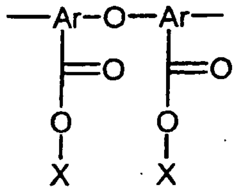

(A)

ist und in einer Menge von 200 bis 5.000 ppm im Polycarbonat enthalten ist worin

Y H oder eine Verbindung der Formel (4)

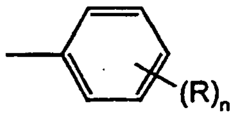

(4)

ist, worin

R H, $C_1$-$C_{20}$-Alkyl, $C_6H_5$ oder $C(CH_3)_2C_6H_5$ und gleich oder verschieden sein kann und n für 0,1,2 oder 3 steht,
X Y oder -(MOCOO)Y ist und M und Y die oben angegebene Bedeutung haben.

**2.** Schmelzpolymerisiertes Polycarbonat nach Anspruch 1, worin eine Verbindung B der Formel

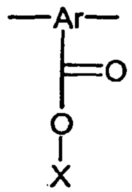

(B)

enthalten ist und worin Ar und X die zuvor angegebene Bedeutung haben.

**3.** Schmelzpolymerisiertes Polycarbonat nach Anspruch 1 oder 2, worin eine Verbindung C der Formel

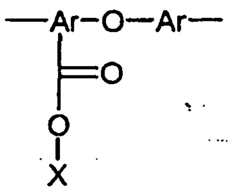

(C)

enthalten ist und worin Ar und X die zuvor angegebene Bedeutung haben.

**4.** Schmelzpolymerisiertes Polycarbonat nach einem der Ansprüche 1 bis 3, worin eine Verbindung D der Formel

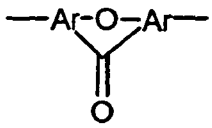 (D)

enthalten ist und worin Ar die zuvor angegebene Bedeutung hat.

**5.** Polycarbonat nach einem der Ansprüche 2 bis 4 mit einem Scherentzähungsverhältnis y entsprechend der Gleichung

$$y > 0{,}30 + 0{,}1312x^{14{,}881}$$

wobei y berechnet wird als Schmelzeviskosität (gemäß ISO 11443 bei 280°C) bei einer Scherrate von $50s^{-1}$ dividiert durch die Schmelzeviskosität bei einer Scherrate von $5000s^{-1}$ worin x die relative Viskosität (gemessen in einer 0,5 %-igen Lösung von Methylenchlorid bei 20°C) des Polycarbonats ist.

**6.** Zusammensetzung, enthaltend ein schmelzpolymerisiertes Polycarbonat nach einem der Ansprüche 1 bis 5.

**7.** Formkörper, enthaltend eine Zusammensetzung nach Anspruch 6

**8.** Schmelzpolymerisationsverfahren zur Herstellung von Polycarbonaten gemäß Anspruch 1 bis 6, in dem Diphenole und/oder Carbonatoligomere mit Hydroxy- oder Carbonatendgruppen in Gegenwart eines Katalysators bei einer Temperatur von 150 bis 400°C und einem Druck von 1.000 mbar bis 0,01 mbar hergestellt werden und als Katalysator eine quartäre Verbindung der Formel (7)

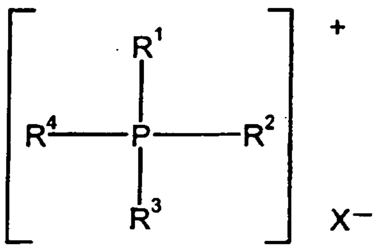 (7)

eingesetzt wird, worin $R^1$, $R^2$, $R^3$ und $R^4$ die gleichen oder verschiedene $C_1$ bis $C_{18}$-Alkylene, $C_6$ bis $C_{10}$-Aryle oder $C_5$ bis $C_6$-Cycloalkyle bezeichnen können und $X^-$ für ein Anion stehen kann, bei dem das entsprechende Säure-Base-Paar $H^+ + X^- \leftrightarrow HX$ ein $pK_b$ von < 11 hat und worin als Cokatalysatoren Aminsalze, Salze von Alkalimetallen und Erdalkalimetallen, wie Hydroxide, Alkoxide und Aryloxide von Silicium, Natrium und Kalium in Mengen von 201 - 10.000 ppb berechnet als Natrium, eingesetzt werden.

**9.** Schmelzpolymerisationsverfahren nach Anspruch 8, worin der Katalysator ein Gemisch aus Tetraphenylphosphoniumphenolat und Natriumphenolat ist.

**10.** Schmelzpolymerisationsverfahren nach Anspruch 9, worin der Katalysator ein Gemisch aus Tetraphenylphosphoniumphenolat und Natriumphenolat ist und an Natrium 210 - 500 ppb enthalten sind.

**Claims**

**1.** Melt-polymerised polycarbonate of the general formula (1)

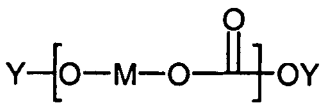

(1)

wherein the square brackets denote repeating structural units,

M may be Ar or a multifunctional compound A and

wherein

Ar may be a compound represented by the formula (2)

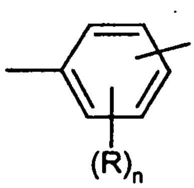

(2)

or a compound represented by the formula (3)

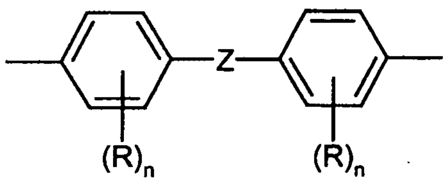

(3)

wherein

Z = $C_1$-$C_8$-alkylidene or $C_5$-$C_{12}$-cycloalkylidene, S, $SO_2$ or a single bond, R is a substituted or unsubstituted phenyl, methyl, propyl, ethyl, butyl, Cl or Br, and n represents 0, 1 or 2,

wherein the multifunctional compound A is a compound of the formula

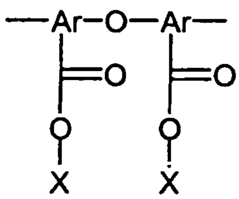

(A)

and is present in the polycarbonate in an amount of from 200 to 5000 ppm,
wherein

Y is H or a compound of the formula (4)

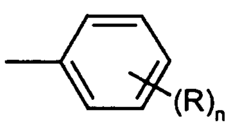

(4)

wherein

R may be H, $C_1$-$C_{20}$-alkyl, $C_6H_5$ or $C(CH_3)_2C_6H_5$ and may be identical or different, and
n represents 0, 1, 2 or 3,
X is Y or -(MOCOO)Y and M and Y are as defined above.

**2.** Melt-polymerised polycarbonate according to claim 1,
wherein a compound B of the formula

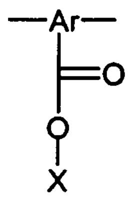

(B)

is present and wherein Ar and X are as defined above.

**3.** Melt-polymerised polycarbonate according to claim 1 or 2, wherein a compound C of the formula

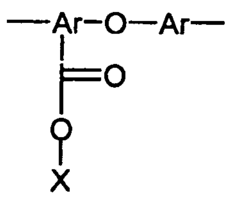

(C)

is present and wherein Ar and X are as defined above.

**4.** Melt-polymerised polycarbonate according to any one of claims 1 to 3, wherein a compound D of the formula

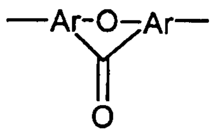

(D)

is present and wherein Ar is as defined above.

**5.** Polycarbonate according to any one of claims 2 to 4 having a shear thinning ratio y in accordance with the equation

$$y > 0.30 + 0.1312x^{14.881},$$

wherein y is calculated as the melt viscosity (according to ISO 11443 at 280°C) at a shear rate of 50 $s^{-1}$ divided by the melt viscosity at a shear rate of 5000 $s^{-1}$, wherein x is the relative viscosity (measured in a 0.5 % solution of methylene chloride at 20°C) of the polycarbonate.

**6.** Composition containing a melt-polymerised polycarbonate according to any one of claims 1 to 5.

**7.** Moulded body containing a composition according to claim 6.

**8.** Melt polymerisation process for the preparation of polycarbonates according to claim 1 to 6, in which process

diphenols and/or carbonate oligomers having hydroxy or carbonate terminal groups are prepared in the presence of a catalyst at a temperature of from 150 to 400°C and a pressure of from 1000 mbar to 0.01 mbar, and there is used as catalyst a quaternary compound of the formula (7)

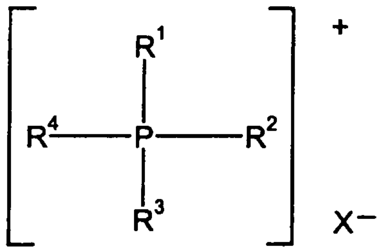

(7)

wherein $R^1$, $R^2$, $R^3$ and $R^4$ may denote the same or different $C_1$- to $C_{18}$-alkylenes, $C_6$- to $C_{10}$-aryls or $C_5$-to $C_6$-cycloalkyls and $X^-$ may represent an anion, in which the corresponding acid-base pair $H^+ + X^- \leftrightarrow HX$ has a $pK_b$ of < 11, and wherein there are used as cocatalysts amine salts, salts of alkali metals and alkaline earth metals, such as hydroxides, alkoxides and aryloxides of silicon, sodium and potassium, in amounts of from 201 to 10,000 ppb, calculated as sodium.

**9.** Melt polymerisation process according to claim 8, wherein the catalyst is a mixture of tetraphenylphosphonium phenolate and sodium phenolate.

**10.** Melt polymerisation process according to claim 9, wherein the catalyst is a mixture of tetraphenylphosphonium phenolate and sodium phenolate, and from 210 to 500 ppb of sodium are present.

**Revendications**

**1.** Polycarbonate polymérisé à l'état fondu, de la formule générale (1) :

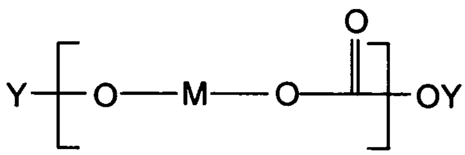

(1)

où les crochets désignent des unités structurales réccurentes,
M peut être Ar ou un composé A multifonctionnel, et
où
Ar peut être un composé, qui est représenté par la formule (2) :

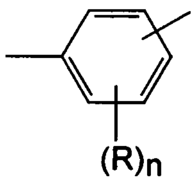

(2)

ou un composé, qui est représenté par la formule (3) :

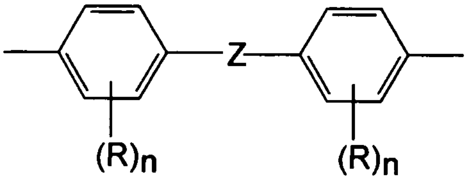

(3)

où

Z = un radical alcoylidène en $C_1$-$C_8$ ou cycloalcoylidène en $C_5$-$C_{12}$, S, $SO_2$ ou une simple liaison, R représente un radical phényle substitué ou non substitué, méthyle, propyle, éthyle, butyle, l'atome Cl ou Br et n représente 0, 1 ou 2, où le composé A multifonctionnel est un composé de la formule :

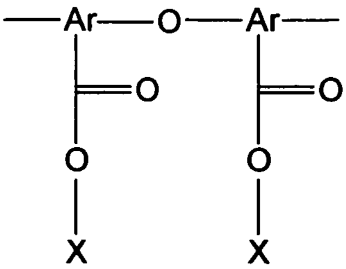

(A)

et est présent dans le polycarbonate, en une quantité allant de 200 à 5000 ppm,

où

Y est H ou un composé de la formule (4) :

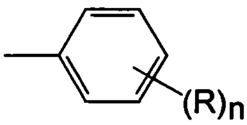

(4)

où

R est H, un radical alcoyle en $C_1$-$C_{20}$, $C_6H_5$ ou $C(CH_3)_2C_6H_5$ et peut être identique ou différent, et n représente 0, 1, 2 ou 3,

X est Y ou -(MOCOO)Y et M et Y ont la signification indiquée ci-dessus.

**2.** Polycarbonate polymérisé à l'état fondu selon la revendication 1, où un composé B de la formule :

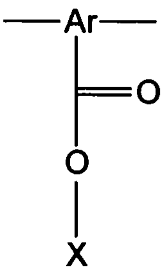

(B)

est présent et où Ar et X ont la signification indiquée ci-dessus.

**3.** Polycarbonate polymérisé à l'état fondu selon la revendication 1 ou 2, où un composé C de la formule :

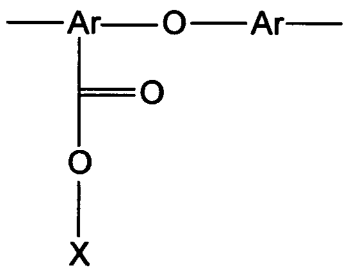

(C)

est présent et où Ar et X ont la signification indiquée ci-dessus.

4. Polycarbonate polymérisé à l'état fondu selon l'une des revendications 1 à 3, où un composé D de la formule :

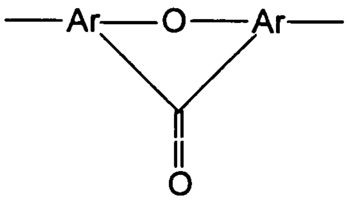

(D)

est présent et où Ar a la signification indiquée ci-dessus.

5. Polycarbonate selon l'une des revendications 2 à 4, avec un comportement de dilution par cisaillement y correspondant à l'inéquation :

$$y > 0{,}30 +{,}0{,}1312\ x^{14{,}881}$$

où y est calculé comme une viscosité à l'état fondu (selon ISO 11443 à 280°C) à un taux de cisaillement de 50 $s^{-1}$, divisée par la viscosité à l'état fondu à un taux de cisaillement de 5000 $s^{-1}$, où x est la viscosité relative (mesurée dans une solution à 0,5% de chlorure de méthylène à 20°C) du polycarbonate.

6. Composition contenant un polycarbonate polymérisé à l'état fondu selon une des revendications 1 à 5.

7. Corps moulé, contenant une composition selon la revendication 6.

8. Procédé de polymérisation à l'état fondu, pour la préparation de polycarbonates selon les revendications 1 à 6, dans lequel on prépare des diphénols et/ou oligomères carbonate avec des radicaux terminaux hydroxy ou carbonate en présence d'un catalyseur, à une température de 150 à 400°C et à une pression de 1000 mbar à 0,01 mbar et on met en oeuvre comme catalyseur, un composé quaternaire de la formule (7) :

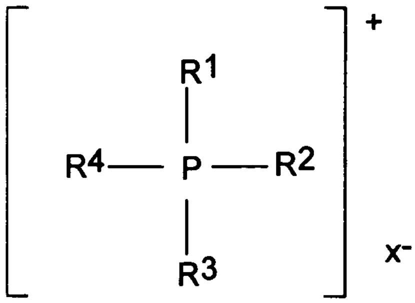

(7)

où $R^1$, $R^2$, $R^3$ et $R^4$ peuvent représenter des radicaux identiques ou différents, alcoylène en $C_1$-$C_{18}$, aryle en $C_6$-$C_{10}$ ou cycloalkyle en $C_5$-$C_6$ et $X^-$ peut représenter un anion, pour lequel la paire acide-base correspondante $H^+ + X^- \leftrightarrow HX$ a un $pK_b$ de < 11 et où comme cocatalyseur, on met en oeuvre des sels d'amine, des sels de métal alcalin et de métal alcalino-terreux, comme des hydroxydes, des alcoxydes et des aryloxydes de silicium, de sodium et de potassium, en des quantités de 201-10 000 ppb, calculé comme sodium.

**9.** Procédé de polymérisation à l'état fondu selon la revendication 8, où le catalyseur est un mélange de phénolate de tétraphénylphosphonium et de phénolate de sodium.

**10.** Procédé de polymérisation à l'état fondu selon la revendication 9, où le catalyseur est un mélange de phénolate de tétraphénylphosphonium et de phénolate de sodium et 210-500 ppb de sodium sont présents.